# EUROPÄISCHE PATENTANMELDUNG

(11) **EP 0 540 801 A1**
(43) Veröffentlichungstag der Anmeldung: **12.05.1993**
(21) Anmeldenummer: 91810860.6
(22) Anmeldetag: 07.11.1991
(51) Int. Cl.: A61C 17/02, H02G 11/02, B65H 75/36

(54) **Körperpflegegerät mit einem Gehäuse und einem Wandhalter**

(71) Anmelder: LES PRODUITS ASSOCIES L.P.A. BROXO S.A., CH-1225 Chene-Bourg (CH)
(72) Erfinder: Moret, Michel, CH-1208 Genf (CH)
(74) Vertreter: Jörchel, Dietrich R.A.

(57) **Zusammenfassung**

Das Körperpflegegerät hat ein Gehäuse (1), in dem ein elektrischer Antrieb untergebracht ist, und ein elektrisches Anschlusskabel (11). An der Gehäuserückseite (2) ist lösbar ein spulenförmiger Kabelhalter (4) befestigbar, der gleichzeitig als Wandhalter dient, mit welchem nach Wunsch das Gehäuse (1) an einer Wand (12) befestigt werden kann. Dieser Kabelhalter (4) weist eine an der Wand befestigbare Platte (5), einen an deren Vorderseite vorspringenden rippenförmigen Steg (7) und einen am Ende des Stegs angeformten Wandteil (8) auf. Der zur Platte (5) parallele Wandteil (8) ist mit Befestigungsorganen zur lösbaren Befestigung an der Rückseite (2) des Gehäuses (1) versehen. Der freie Raum zwischen Platte (5) und Wandteil (8) dient zur Aufnahme des elektrischen Anschlusskabels (11), welches um den Steg (7) herum aufwickelbar ist.

## Beschreibung

Die Erfindung bezieht sich auf ein Körperpflegegerät mit einem Gehäuse, das einen elektrischen Antrieb enthält, mit einem aus dem Gehäuse austretenden elektrischen Kabel zum äusseren Anschluss des elektrischen Antriebs, mit einem Kabelhalter, an welchem das Kabel aufwickelbar ist, und mit einem lösbar an einer Seite des Gehäuses montierbaren Wandhalter, der wenigstens ein Befestigungsorgan zur Verbindung mit dem Gehäuse aufweist und mit welchem das Gehäuse nach Wunsch an einer Wand befestigt werden kann.

Ein bekanntes Körperpflegegerät dieser Art ist als Munddusche ausgebildet und mit einer elektrisch betriebenen Flüssigkeitspumpe, einem abnehmbaren Flüssigkeitsreservoir und einem Düsenhalter in Form eines Griffstücks ausgerüstet, welcher durch einen biegsamen Schlauch mit der Flüssigkeitspumpe verbunden ist und auf den auswechselbar eine Spritzdüse zur Flüssigkeitsbehandlung der Zähne und des Zahnfleisches aufsetzbar ist. Der Kabelhalter ist dabei im Boden des Gehäuses angebracht, welcher eine um einen zentralen Kern herum verlaufende, in sich geschlossene Vertiefung aufweist, die zur Aufnahme des um den Kern herum aufwickelbaren Kabels dient. Der Wandhalter besteht im wesentlichen aus einer an der Gehäuserückseite lösbar befestigbaren Platte, die im am Gehäuse montierten Zustand dicht an der Gehäuserückwand anliegt. Die Ausbildung des bekannten Kabelhalters ist insofern ungünstig, als das Aufwickeln des Kabels und das Abwickeln desselben unbequem ist. Wenn das Handgerät nicht an einer Wand befestigt, sondern auf einer Unterlage abgestellt ist, dann muss man zum Auf- oder Abwickeln des Kabels das Gehäuse anheben, teilweise umdrehen und dann das Kabel um den praktisch im Gehäuseinnern versenkten Kern aufwickeln bzw. von diesem abwickeln. Diese etwas unbequemen Manipulationen, bei denen jeweils das Gehäuse nicht nur angefasst, sondern auch in die Hand genommen werden muss, sind insbesondere jedesmal dann erforderlich, wenn das Körperpflegegerät an einen anderen Platz gebracht oder zum Beispiel für eine Reise eingepackt werden soll. Wenn man das Kabel im Falle eines an einer Wand befestigten Geräts aufwickeln will, dann muss man, da dieses Gerät in der Regel in Schulterhöhe an der Wand angebracht ist, in die Knie gehen, um die Manipulation am Gehäuseboden durchführen zu können, oder das Gehäuse muss zu diesem Zwecke von der Wand abgenommen werden.

In verschiedenen Ländern, wie in Deutschland und in der Schweiz, besteht die Vorschrift, dass Steckdosen in Badezimmern in einem Schrank angebracht werden müssen, der nur bei Benutzung der Steckdose geöffnet wird, sonst aber geschlossen sein muss. Um nach jeder Benutzung des Handgeräts die Schranktür schliessen zu können, muss also jedesmal das Anschlusskabel aus der Steckdose herausgezogen und aufgerollt werden, wenn man es nicht unordentlich herumhängen oder herumliegen lassen will. Dieses Aufwickeln jedoch ist bei den bisher bekannten Geräten umständlich.

Der Erfindung liegt die Aufgabe zugrunde, ein Körperpflegegerät so zu verbessern, dass bei Bedarf das elektrische Anschlusskabel, sowohl bei an der Wand befestigtem Gerät als auch bei auf einer Unterlage abgestelltem Gerät, auf einfache und bequeme Weise vom Benutzer auf den Kabelhalter aufgewickelt bzw. von diesem abgewickelt werden kann, ohne dass es erforderlich ist, das Gerätegehäuse anzufassen oder gar anzuheben oder anderweitig zu bewegen.

Diese Aufgabe wird durch die im kennzeichnenden Teil des Anspruchs 1 angegebenen Merkmale gelöst.

Auf diese Weise ist der spulenartig ausgebildete Kabelhalter an der einen Gehäuseseite, vorzugsweise an der Gehäuserückseite, stets zum Aufwickeln und Abwickeln des Kabels frei zugänglich, auch bei einem an der Wand befestigten Gehäuse, und ausserdem wird der Aufbau des Gerätegehäuses insofern vereinfacht, als der Gehäuseboden keine spezielle, als Kabelhalter dienende Ausbildung zu haben braucht, da der Kabelhalter gemäss der Erfindung gleichzeitig als Wandhalter dient. Das vereinfachte Aufwickeln des Kabels ist besonders dort von Bedeutung, wo die Steckdosen in einem Schrank installiert sind, der bei Nichtbenutzung der Steckdose geschlossen werden muss, und wo daher das Kabel nach jeder Benutzung aus der Steckdose entfernt werden muss.

Zweckmässige Ausgestaltungen der Erfindung ergeben sich aus den abhängigen Ansprüchen.

Die Erfindung wird anhand der Zeichnungen an einem Ausführungsbeispiel näher erläutert. Es zeigen :
Figur 1 eine Seitenansicht des Kabel- und Wandhalters, und zwar auf die die Befestigungsorgane aufweisende Seite, mit welcher dieser Halter an der Gehäuserückseite des Körperpflegegeräts befestigbar ist,
Figur 2 eine Ansicht dieses Halters in Richtung II nach Figur 1,
Figur 3 eine Draufsicht auf den Halter,
Figur 4 einen Schnitt längs der Linie IV-IV nach Figur 3,
Figur 5 einen Schnitt längs der Linie V-V nach Figur 3,
Figur 6 eine Seitenansicht eines an einer Wand befestigten Körperpflegegeräts nach der Erfindung mit auf dem Kabel- und Wandhalter aufgewickeltem Kabel und
Figur 7 eine Ansicht des auf einer Unterlage abgestellten Geräts.

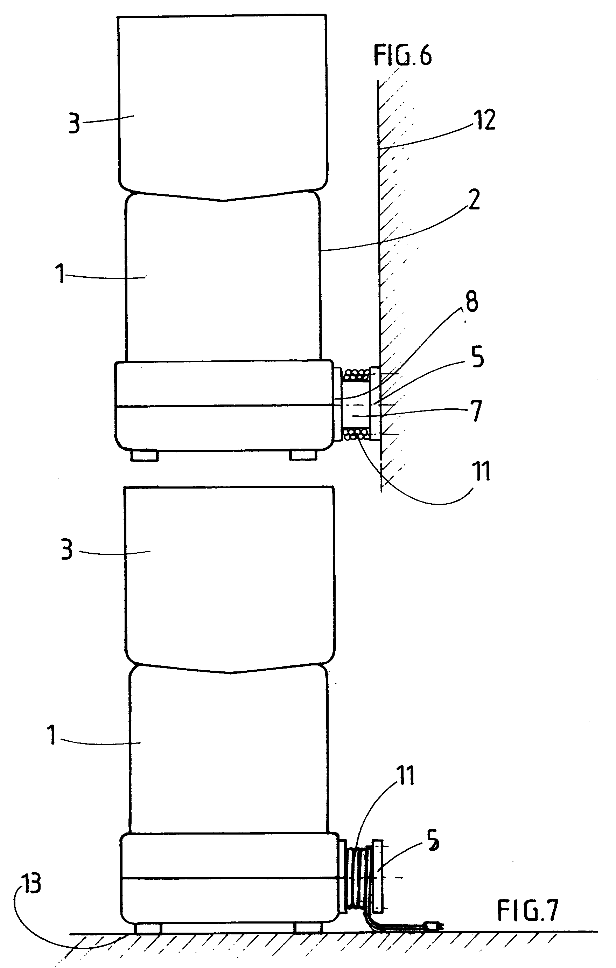

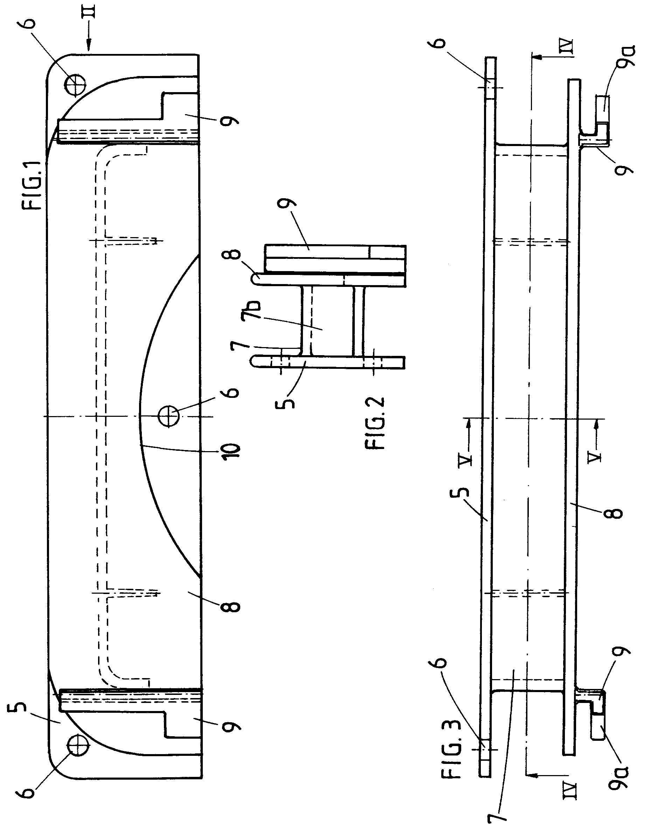

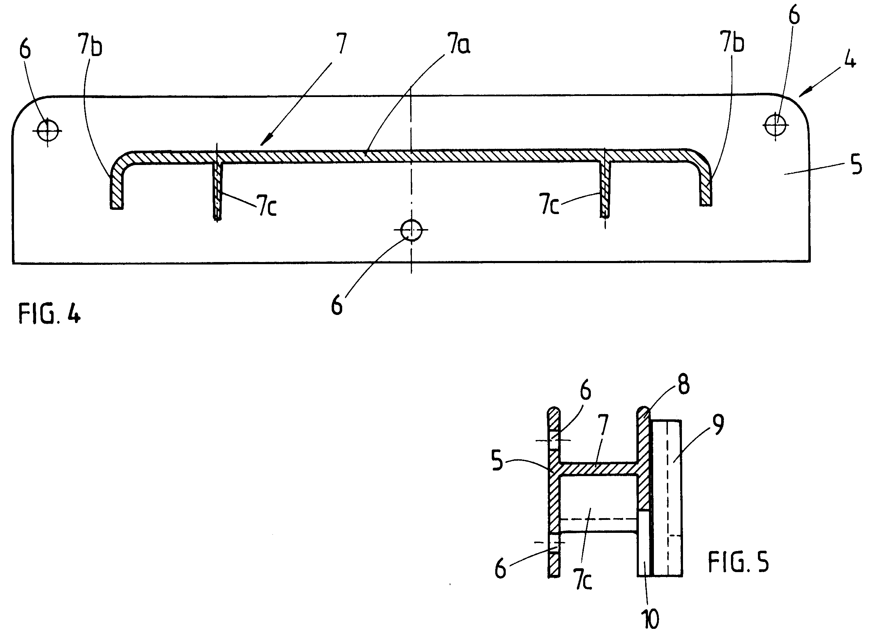

Der in den Figuren 1 bis 5 dargestellte, gleichzeitig als Wandhalter dienende Kabelhalter 4 ist spulenförmig ausgebildet und besteht aus einem einteiligen Kunststoffteil. Er weist eine langgestreckte, rechteckförmige Platte 5, einen an deren Vorderseite angeformten, rechtwinklig vorspringenden Steg 7 und einen an dessen Ende angeformten Wandteil 8 auf, an deren dem Steg 7 abgewandten Seite zwei Befestigungsorgane 9 angeformt sind.

Die Platte 5 hat in der Nähe ihrer Ränder, im betrachteten Beispiel an ihren beiden oberen Ecken und unten in der Mitte, drei Befestigungslöcher 6 zum Durchtritt von Schrauben, mit denen der als Wandhalter dienende Kabelhalter 4 mit der dem Steg 7 abgewandten Rückseite der Platte 5 an einer Wand befestigt werden kann. Der Steg 7 hat die Form einer etwa in der Mitte der Platte 5, parallel zu deren Längsseiten, verlaufenden Rippe, deren Enden 7b nach unten bogenförmig gekrümmt sind und die zur Verstärkung an ihrem gradlinigen mittleren Bereich 7a mit zwei nach unten gerichteten rippenförmigen Ansätzen 7c versehen ist. Der am Steg 7 angeformte Wandteil 8 ist zur Platte 5 parallel und so ausgebildet, dass er die drei Befestigungslöcher 6 nicht überlappt. Zu diesem Zwecke ist der Wandteil 8 an seinen Seiten derart abgerundet und an seinem unteren Rande derart mit einer gebogenen Ausnehmung 10 versehen, dass die Löcher 6 auf der Vorderseite zum Eindrehen von Befestigungsschrauben zugänglich sind.

Die beiden Befestigungsorgane 9 sind in der Draufsicht bzw. im Querschnitt L-förmig ausgebildet und erstrecken sich parallel zur Schmalseite der Platte 5. Der eine, am Wandteil 8 angeformte L-Schenkel steht rechtwinklig an der Wandseite vor, während der andere L-Schenkel parallel zur Ebene des Wandteils 8 orientiert und stufenförmig mit einer Stufe 9a ausgebildet ist. Diese L-förmigen Befestigungsorgane 9 dienen als Schieber, welche in entsprechende L-förmige Schlitze an der Rückseite 2 des Gehäuses 1 des Körperpflegegeräts (Figur 6 und 7) einschiebbar sind, so dass das Gehäuse 1 an diesen Befestigungsorganen 9, mit seiner Rückseite 2 am Wandteil 8 anliegend, aufgehängt, bei Bedarf jedoch auch wieder vom Wand- und Kabelhalter 4 gelöst werden kann.

Da der Steg 7 gegenüber allen Rändern der Platte 5 zum mittleren Bereich derselben hin versetzt ist, kann der freie, den Steg 7 umgebende Raum zwischen Platte 5 und Wandteil 8 zur Aufnahme des aus dem Gehäuse austretenden Anschlusskabels dienen, welches bequem und einfach um den Steg 7 herum aufwickelbar ist bzw. von diesem abgewickelt werden kann. Der Steg 7 dient also als Spulenkern. Dabei kann die Grösse des Zwischenraums zwischen Platte 5 und Wandteil 8, entsprechend der Kabellänge, durch entsprechende Wahl der Abmessung und Gestalt des Stegs 7 in geeigneter Weise vorgegeben werden.

Figur 6 zeigt schematisch ein Körperpflegegerät, das mit Hilfe des Wand- und Kabelhalters 4 an einer Wand 12 befestig ist. Im betrachteten Beispiel handelt es sich beim Körperpflegegerät um eine Munddusche mit einer im Gehäuse 1 untergebrachten, durch einen Elektromotor angetriebenen Flüssigkeitspumpe, einem abnehmbaren Flüssigkeitsreservoir 3 und einem nicht gezeigten Düsenhalter in Form eines Griffstücks, der mittels eines biegsamen Schlauches mit der Flüssigkeitspumpe verbunden ist und auf den auswechselbar Spritzdüsen zur Flüssigkeitsbehandlung, insbesondere der Zähne und des Zahnfleisches, aufsetzbar sind.

In der Darstellung nach Figur 6 ruht das Reservoir 3 in seiner Betriebsstellung auf dem Gehäuse 1, und das Kabel 11 zum Anschluss des Elektromotors ist auf dem Kabelhalter 4, zwischen Platte 5 und Wandteil 8, aufgewickelt.

Figur 7 zeigt das gleiche Körperpflegegerät mit auf einer Unterlage 13 abgestelltem Gehäuse 1 und mit ebenfalls aufgewickeltem Kabel 11. Man erkennt, dass das Kabel 11 in beiden Fällen, ohne das Gehäuse 1 anfassen oder bewegen zu müssen, bequem und leicht auf dem Kabelhalter 9 aufgewickelt bzw. von diesem wieder abgewickelt werden kann. Natürlich wird man die Länge der rechteckförmigen Platte 5 bzw. des Kabelhalters 4 ungefähr so lang wie die Gehäuserückwand 2 wählen, um genügend Platz zur Aufnahme des aufgewickelten Kabels zur Verfügung zu haben und einen guten Halt für das an einer Wand befestigte Gehäuse 1 zu gewährleisten.

Beim Körperpflegegerät kann es sich auch um ein beliebiges anderes Gerät mit einem einen elektrischen Antrieb enthaltenden Gehäuse und einem Anschlusskabel handeln, beispielsweise ein kombiniertes Gerät, das sowohl mit einer Spritzdüse als auch mit einer hydraulisch angetriebenen Zahnbürste ausgerüstet ist.

Die Erfindung ist nicht auf das beschriebene Ausführungsbeispiel beschränkt, sondern lässt hinsichtlich der Ausbildung des Wand- und Kabelhalters, seines Stegs 7, welcher auch aus mehreren Teilen bestehen kann, und der Befestigungsorgane mannigfache Varianten zu. Auch kann der Steg 7 so ausgebildet sein, dass die Befestigungsorgane, unter Verzicht auf einen Wandteil 8, direkt an diesem Steg angeformt sind. In diesem Falle wird der freie Raum um den Steg herum durch die Wand 5 und direkt durch die Rückseite des Gehäuses begrenzt.

## Patentansprüche

1. Körperpflegegerät mit einem Gehäuse (1), welches einen elektrischen Antrieb enthält, mit einem aus dem Gehäuse (1) austretenden elektrischen Kabel (11) zum äusseren Anschluss des elektrischen Antriebs, mit einem Kabelhalter (4), an welchem das Kabel aufwickelbar ist, und mit einem lösbar an einer Seite (2) des Gehäuses (1) montierbaren Wandhalter, der wenigstens ein Befestigungsorgan (9) zur Verbindung mit dem Gehäuse aufweist und mit welchem das Gehäuse nach Wunsch an einer Wand (12) befestigt werden kann, dadurch gekennzeichnet, dass der Kabelhalter (4) eine Platte (5) mit wenigstens einem, an einer Plattenseite im wesentlichen rechtwinklig vorspringenden Steg (7) aufweist, der gegenüber den Plattenrändern zum mittleren Bereich der Plattenseite hin versetzt ist und an dessen Ende das erwähnte Befestigungsorgan (9) angebracht ist, dass die Platte (5) im am Gehäuse (1) montierten Zustand einen der Länge des Stegs (7) entsprechenden Abstand von der erwähnten Gehäuseseite (2) hat und parallel zu dieser Gehäuseseite orientiert ist, wobei der den Steg (7) umgebenden, durch die Platte (5) begrenzte freie Raum hinter der Gehäuseseite (2) zur Aufnahme des auf dem Steg aufgewickelten Kabels (11) dient, und dass der Kabelhalter (4) gleichzeitig der Wandhalter ist, dessen Platte (5) mit ihrer dem Steg abgewandten Seite an einer Wand (12) befestigbar ist.

2. Körperpflegegerät nach Anspruch 1, dadurch gekennzeichnet, dass am Ende des Stegs (7) ein zur Platte (5) parallel orientierter Wandteil (8) angebracht ist, welcher das erwähnte Befestigungsorgan, vorzugsweise zwei Befestigungsorgane (9), aufweist.

3. Körperpflegegerät nach Anspruch 1 oder 2, dadurch gekennzeichnet, dass die Platte (5) die Form eines langgestreckten Rechtecks und der Steg (7) die Form einer in Längsrichtung der Platte verlaufenden Rippe hat, die an ihren Enden (7b) nach derselben Seite hin bogenförmig gekrümmt ist und welche vorzugsweise zur Verstärkung in ihrem mittleren Bereich (7a) mit nach der erwähnten Seite hin gerichteten rippenförmigen Vorsprüngen (7c) versehen ist.

4. Körperpflegegerät nach Anspruch 2 oder 3, dadurch gekennzeichnet, dass die Platte (5) in der Nähe ihrer Ränder Befestigungslöcher (6) aufweist und dass der erwähnte Wandteil (8) diese Befestigungslöcher nicht überlappt.

5. Körperpflegegerät nach einem der Ansprüche 2 bis 4, dadurch gekennzeichnet, dass zwei im Querschnitt L-förmige Befestigungsorgane (7) vorgesehen sind, die sich parallel zur Schmalseite der Platte (5) erstrecken und deren am Wandteil (8) befestigter Schenkel rechtwinklig von diesem absteht, während der andere Schenkel (9a) parallel zum Wandteil (8) orientiert und vorzugsweise gestuft ausgebildet ist, und dass in der die erwähnte Gehäuseseite (2) bildenden Gehäusewand der Form dieser Befestigungsorgane angepasste L-förmige Schlitze vorgesehen sind, in welche diese Befestigungsorgane einschiebbar sind.

6. Körperpflegegerät nach einem der Ansprüche 1 bis 5, dadurch gekennzeichnet, dass der als Wandhalter dienende Kabelhalter (9) als einteiliges Kunststoffteil ausgebildet ist.
